# EUROPEAN PATENT SPECIFICATION

(11) **EP 3 744 512 B1**
(45) Date of publication and mention of the grant of the patent: **27.09.2023**
(21) Application number: 20170680.1
(22) Date of filing: 21.04.2020
(51) Int. Cl.: B29C 70/54

(54) **TRIMMING SYSTEM FOR COMPOSITE STRUCTURES**
TRIMMSYSTEM FÜR VERBUNDSTRUKTUREN
SYSTÈME DE DÉCOUPAGE POUR LES STRUCTURES COMPOSITES

(30) Priority: 28.05.2019 US 201916423512
(43) Date of publication of application: 02.12.2020
(73) Proprietor: The Boeing Company, Arlington, VA 22202 (US)
(72) Inventor: Ahn, Jonathan Young, Chicago, IL 60606-1596 (US); Studley, Silas Lawton, Chicago, IL 60606-1596 (US); Carlson, Lisa Christina, Chicago, IL 60606-1596 (US); Reeves, Jake A., Chicago, IL 60606-1596 (US); Freed, Gregory P., Chicago, IL 60606-1596 (US); Jones, Darell Darwin, Chicago, IL 60606-1596 (US)
(74) Representative: Witte, Weller & Partner Patentanwälte mbB

(56) References cited:
- EP-A1- 2 006 074
- EP-A1- 3 202 545
- WO-A2-2010/144211
- US-A1- 2017 106 924

## Description

### BACKGROUND INFORMATION

### 1. Field:

The present disclosure relates generally to manufacturing composite structures. More specifically, the present disclosure relates to a trimming system used in manufacturing composite structures for aircraft applications and to a corresponding method.

### 2. Background:

Manufacturers use composite structures to provide light-weight and structurally sound parts for various applications. Increasing the efficiency of the composite manufacturing process is a priority for aircraft manufacturers. They seek to lower costs and increase the rate at which an aircraft is produced while minimizing the risk of rework or discarding of composite parts during the process.

In fabricating parts, composite structures are trimmed into desired configurations. Trimming may be a time-consuming and complex process. Some composite structures used for aircraft applications are 21.3+ meters (70+ feet) in length. Orienting and moving such large structures about a manufacturing floor requires time, space, and manpower.

A composite structure may be trimmed into its desired configuration prior to or after curing. When the composite structure is trimmed prior to curing or bonding, the composite material is soft, making it difficult to maintain the integrity of the cut. To combat this challenge, the composite structure is cut while under vacuum using an ultrasonic knife. Still, the delicate state of the uncured composite material may lead to knife blade deflection or inconsistencies at different areas of thickness of the cut. In some cases, the deflection is so great that it risks deforming or breaking the knife blade.
Document EP 3 202 545 A1 states in its abstract: An ultrasonic cutting machine including a support structure, a positioning device moveable relative to the support structure, a cutting blade connected to the positioning device and a blade cleaning system positioned proximate the support structure (18), the blade cleaning system including a basin defining an internal volume and an opening into the internal volume, a solvent positioned in the internal volume, a cleaning surface positioned in the internal volume, wherein the cleaning surface is at least partially submerged in the solvent, and a lid positioned over the opening, wherein the lid is automatically displaced from the opening when the cutting blade approximates the basin.
Document WO 2010/144211 A2 states in its abstract: An apparatus for forming molded edges on opposite sides of a load bearing surface including a stretching assembly integrated into a molding assembly. The stretching assembly may include localized fabric clamps that leave the center region of the fabric free (e.g. not clamped) through the process. The clamps may be arranged so that once extended to stretch the fabric, the fabric is held by the clamps in the appropriate position for molding. The fabric may be held so that opposed edges terminate in the mold cavities. The mold parts may cooperatively define two spaced apart mold cavities, and may include a mold pocket to provide space to store excess fabric. The fabric may be held against the surface of the mold cavity during the molding process, for example, using hold-down pins and special gate configurations. The molding apparatus may include an alternative stretching assembly configured to provide different amounts of stretch to different portions of the fabric blank. The alternative stretching assembly may include additional intermediate clamps.

Therefore, it would be desirable to have a method and apparatus that takes into account at least some of the issues discussed above, as well as other possible issues.

### SUMMARY

A composite manufacturing system according to the claimed invention is defined in claim 1.

A method for trimming an uncured composite structure according to the claimed invention is defined in claim 9.

An example of the present disclosure provides a composite manufacturing system for trimming an uncured composite structure for an aircraft. The composite manufacturing system comprises a tool, a robotic arm, and a trimming system connected to the robotic arm. The trimming system comprises a knife, a rotation device, a number of lasers, a load cell associated with the knife, and a controller. The uncured composite structure is laid up on the tool.

The features and functions can be achieved independently in various embodiments of the present disclosure or may be combined in yet other embodiments in which further details can be seen with reference to the following description and drawings.

### BRIEF DESCRIPTION OF THE DRAWINGS

The scope of the claimed invention is defined in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a perspective view of a composite manufacturing system in accordance with an illustrative embodiment;
**Figure 2** is an illustration of a block diagram of a manufacturing environment in accordance with an illustrative embodiment;
**Figure 3** is an illustration of a perspective view of a trimming system in accordance with an illustrative embodiment;
**Figure 4** is an illustration of a side view of a trimming system in accordance with an illustrative embodiment;
**Figure 5** is an illustration of a top view of a trimming system in accordance with an illustrative embodiment;
**Figure 6** is an illustration of an exploded view of a trimming system in accordance with an illustrative embodiment;
**Figure 7** is an illustration of a knife blade in accordance with an illustrative embodiment;
**Figure 8** is another illustration of a knife blade in accordance with an example;
**Figure 9** is an illustration of a perspective view of a cut in an uncured composite structure in accordance with an illustrative embodiment;
**Figure 10** is an illustration of a cross-sectional view of a cut in an uncured composite structure in accordance with an illustrative embodiment;
**Figure 11** is a cross-sectional view of a composite stringer in accordance with an illustrative embodiment;
**Figure 12** is an illustration of a flowchart of a process for trimming an uncured composite structure in accordance with an illustrative embodiment;
**Figure 13** is another illustration of a flowchart of a process for trimming an uncured composite structure for an aircraft in accordance with an illustrative embodiment;
**Figure 14** is yet another illustration of a flowchart of a process for trimming an uncured composite structure for an aircraft in accordance with an illustrative embodiment;
**Figure 15** is an illustration of a block diagram of an aircraft manufacturing and service method in accordance with an illustrative embodiment; and
**Figure 16** is an illustration of a block diagram of an aircraft in which an illustrative embodiment may be implemented.

### DETAILED DESCRIPTION

The illustrative embodiments recognize and take into account one or more different considerations. For example, the illustrative embodiments recognize and take into account that current manufacturing processes for composite structures may present challenges in efficiency of production. Composite parts, such as stringers used for aircraft, require additional trimming before being bonded to other composites to complete the structure. Since these parts are trimmed before curing or bonding, the delicate material risks smashing and deformation from the knife blade.

The illustrative embodiments also recognize and take into account that many trimming systems for composites are mounted onto large, immobile structures in the manufacturing environment. For instance, a trimming system may be mounted to a gantry which can move in only one or two directions relative to the structure. As a result, the composites must be moved, flipped, or otherwise oriented with reference to the gantry system. Since some composite parts are seventy feet or more in length, orientation becomes more difficult and time consuming than desired. These gantry systems also require extensive floor space and cannot cut multiple segments of the part simultaneously.

Further, the illustrative embodiments recognize and take into account that the trim angle and setup of the system are important variables to the success of the cut. Ultrasonic knives preferably are designed to have a stop feature that prevents blade deflection from snapping or breaking the blade. During trimming, if the blade comes in contact with the tool, it will deflect toward the composite, resulting in not only deflection of the blade but also inconsistencies in the cut. Blade shape is critical to the integrity of the cut. Some blade shapes do not trim composites as desired.

The claimed invention provides a composite manufacturing system having a robotic arm and a trimming system connected to the robotic arm. The trimming system comprises a knife, a rotation device, a number of lasers, and a load cell associated with the knife. The rotation device is configured to rotate a blade of the knife about a center point. The number of lasers is configured to determine a position of the blade relative to a desired position for the blade. The load cell is configured to sense an amount of force applied to the blade during trimming of an uncured composite structure. The blade comprises a first side having a double-beveled shape and a second side opposite the first side having a planar shape. The blade trims the uncured composite structure using the second side. A layer of porous material may be positioned between the uncured composite structure and the tool to minimize blade deflection during trimming. Composite structures may be trimmed prior to or after curing and multiple robots may move about the manufacturing environment to trim the composite structure at the same time.

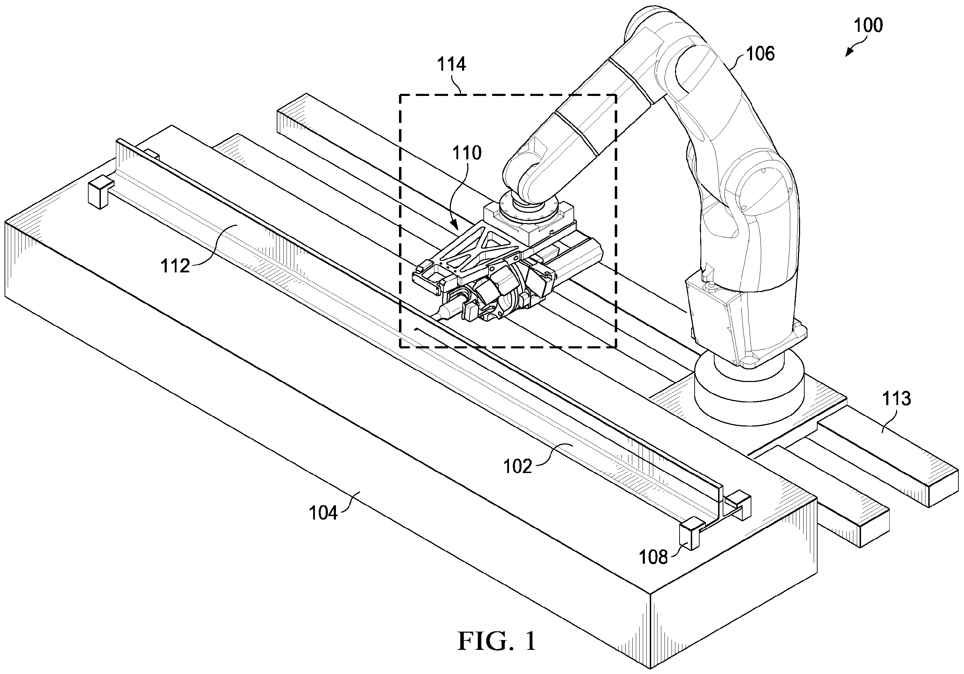

With reference now to the figures and, in particular, with reference to **Figure 1****,** an illustration of a perspective view of a composite manufacturing system is depicted in accordance with an illustrative embodiment. Composite manufacturing system **100** comprises a combination of automated components and/or devices capable of performing processing on uncured composite structure **102.**

As depicted, composite manufacturing system **100** includes tool **104,** robotic arm **106,** support structures **108,** and trimming system **110.** Trimming system **110** is used to trim composite material **112** in its uncured state.

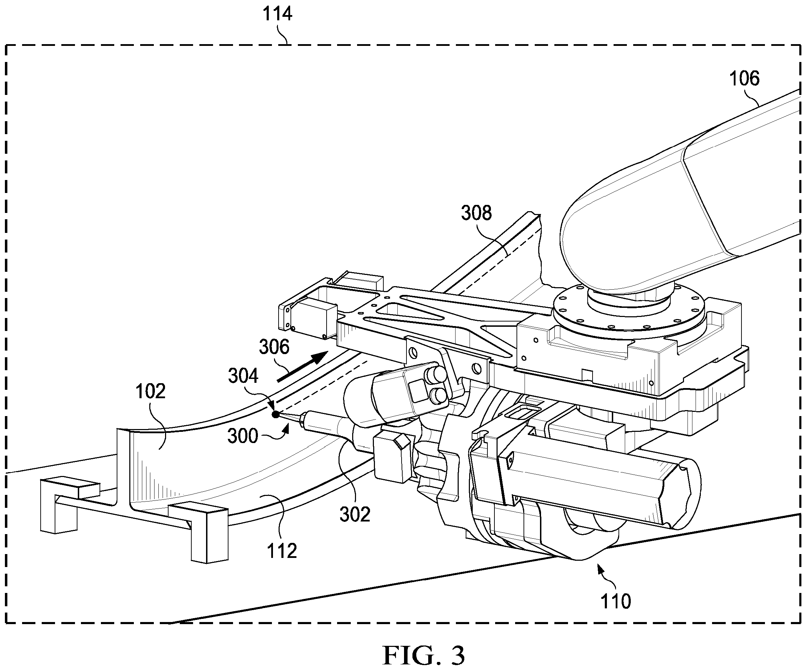

As depicted, robotic arm **106** is on rails **113.** Rails **113** allow movement about the manufacturing environment. Section **114** with trimming system **110** and a portion of uncured composite structure **102** is shown in greater detail in **Figure 3****.**

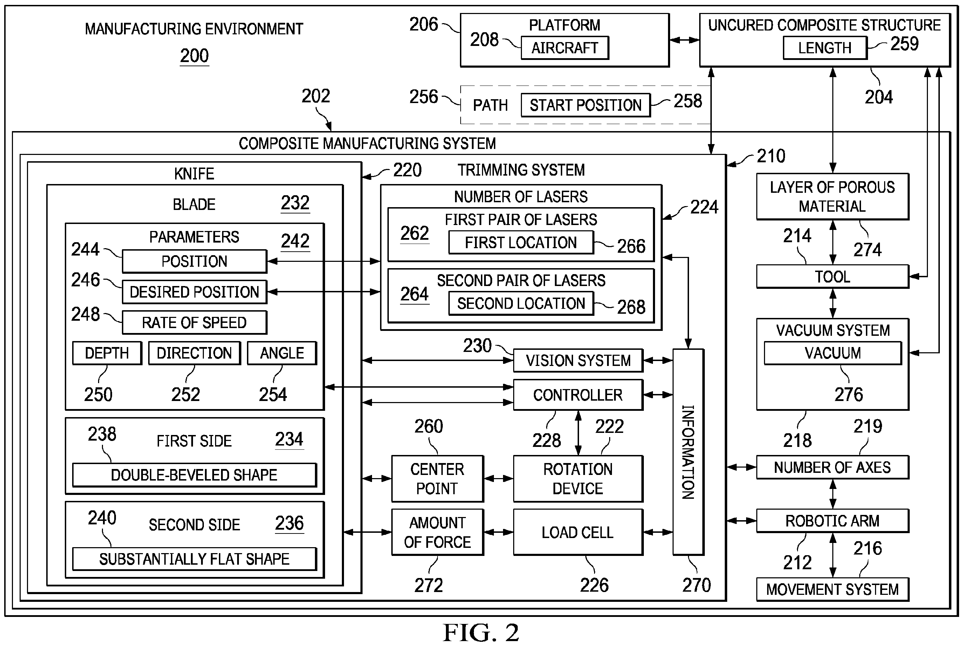

Turning now to **Figure 2****,** an illustration of a block diagram of a manufacturing environment is depicted in accordance with an illustrative embodiment. Manufacturing environment **200** is an environment where components within composite manufacturing system **202** may be used to fabricate a composite structure. Specifically, composite manufacturing system **202** is used to perform processes on uncured composite structure **204** in this illustrative example.

Uncured composite structure **204,** after being cured, is a structure configured for use in platform **206.** Platform **206** may be, for example, without limitation, a mobile platform, a stationary platform, a land-based structure, an aquatic-based structure, or a space-based structure. More specifically, platform **206** may be an aircraft, a surface ship, a tank, a personnel carrier, a train, a spacecraft, a space station, a satellite, a submarine, an automobile, a power plant, a bridge, a dam, a house, a manufacturing facility, a building, and other suitable platforms.

Platform **206** takes the form of aircraft **208** in this illustrative example. When uncured composite structure **204** is manufactured for aircraft **208,** uncured composite structure **204** may be, for example, without limitation, a stringer, a spar, a rib, a panel, a stabilizer, a skin panel, or some other suitable structure configured for use in aircraft **208.**

As depicted, composite manufacturing system **202** comprises trimming system **210,** robotic arm **212,** tool **214,** movement system **216,** and vacuum system **218.** Trimming system **210** takes the form of an end effector for robotic arm **212** such that trimming system **210** is connected to robotic arm **212.** Trimming system **210** may be removably connected to robotic arm **212** such that if robotic arm **212** is needed to perform other processes, trimming system **210** may be removed and another end effector can be attached to robotic arm **212.** Robotic arm **212** moves trimming system **210** about number of axes **219** as desired relative to uncured composite structure **204.**

As illustrated, tool **214** comprises multiple parts configured to support and hold uncured composite structure **204** in place during processing. Tool **214** may include one or more support structures such as a clamp, a bladder, a ballast, a block or some other suitable structure for holding uncured composite structure **204** in place during processing.

In this illustrative example, trimming system **210** includes knife **220,** rotation device **222,** number of lasers **224,** load cell **226,** controller **228,** and vision system **230.** As used herein, "a number of" when used with reference to items means one or more items. Thus, a number of lasers is one or more lasers.

Knife **220** takes the form of an ultrasonic knife in this illustrative example. Knife **220** comprises blade **232.** Blade **232** has first side **234** and second side **236** opposite first side **234.** First side **234** of blade **232** has double-beveled shape **238** while second side **236** of blade **232** has substantially flat shape **240.** Flat shape **240** is a planar shape in this illustrative example. In other words, second side **236** of blade **232** has a flat surface. When cutting uncured composite structure **204,** second side **236** with substantially flat shape **240** faces the trimmed part while first side **234** with double-beveled shape **238** faces the material to be discarded.

In this illustrative example, blade **232** of knife **220** has parameters **242.** Parameters **242** include position **244,** desired position **246,** rate of speed **248,** depth **250,** direction **252,** and angle **254** for blade **232** during trimming of uncured composite structure **204.** Position **244** of blade **232** is the current location and orientation of blade **232** relative to uncured composite structure **204.** Desired position **246** is the desired location and orientation for blade **232** to cut uncured composite structure **204** along path **256.** Path **256** is a predetermined and programmed trim path in this illustrative example. Path **256** has start position **258** for blade **232.** Blade **232** follows path **256** along the entire length **259** of uncured composite structure **204.**

Rate of speed **248** is the rate at which blade **232** trims uncured composite structure **204.** Depth **250** and angle **254** of blade **232** may be adjusted to provide a desired shape of cut for uncured composite structure **204.** Direction **252** of blade **232** is changed based on a desired geometry for the cut. All of parameters **242** for blade **232** may be adjusted in real time in these illustrative examples.

As depicted, rotation device **222** is a device configured to rotate blade **232** of knife **220** about center point **260.** Rotation device **222** takes the form of a rotary stage in this illustrative example. Rotation device **222** is configured to receive commands from controller **228** and rotates blade **232** accordingly.

Number of lasers **224** is configured to determine position **244** of blade **232** relative to desired position **246** for blade **232.** Each of number of lasers **224** takes the form of a laser distance meter in this illustrative example, using the reflection from each laser to determine position **244** of blade **232 .**

In this illustrative example, number of lasers **224** comprises first pair of lasers **262** and second pair of lasers **264** associated with knife **220.** First pair of lasers **262** is positioned in first location **266** relative to blade **232** of knife **220.** In a similar fashion, second pair of lasers **264** is positioned in second location **268** relative to blade **232** of knife **220.** For example, without limitation, first location **266** may be above blade **232** while second location **268** may be on either side adjacent to blade **232.** Number of lasers **224** send information **270** to controller **228** to compare position **244** of blade **242** to desired position **246** for blade **232.**

In this illustrative example, load cell **226** is a device associated with knife **220** and configured to sense amount of force **272** applied to blade **232** during trimming of uncured composite structure **204.** Load cell **226** is a multi-axis load cell in this illustrative example. Load cell **226** sends information **270** to controller **228.**

Controller **228** is a device that controls the behavior of the components within trimming system **210.** Based on information **270** received from number of lasers **224,** load cell **226,** vision system **230,** and other systems, controller **228** adjusts parameters **242** for blade **232** of knife **220.** Specifically, controller **228** is configured to adjust at least one of rate of speed **248,** direction **252,** position **244,** depth **250,** and angle **254** of blade **232** based on information received from components in trimming system **210.**

For example, without limitation, as the thickness of uncured composite structure **204** increases along path **256,** controller **228** may slow down blade **232** to promote the integrity of the cut, reduce blade deflection, and reduce the risk of deformation of blade **232.** In other cases, if the composite material is thin, blade **232** may move faster through these portions of uncured composite structure **204** to promote efficiency in processing. Adjustments in other parameters **242** allow for trimming of uncured composite structure **204** in multiple geometries and to correct blade **232** as desired in real time.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

For example, "at least one of item A, item B, or item C" may include, without limitation, item A, item A and item B, or item B. This example also may include item A, item B, and item C, or item B and item C. Of course, any combination of these items may be present. In other examples, "at least one of" may be, for example, without limitation, two of item A, one of item B, and ten of item C; four of item B and seven of item C; or other suitable combinations.

As illustrated, vision system **230** comprises a number of components that provide visual feedback for trimming system **210.** Vision system **230** may include a camera, a video camera, or other suitable components. Vision system **230** provides visual feedback as blade **232** cuts through uncured composite structure **204.** For instance, vision system **230** may provide an image of blade **232** in position **244** such that a human operator may view the trimming process as it occurs. Vision system **230** provides information **270** to controller **228.**

In this depicted example, movement system **216** is associated with robotic arm **212.** Movement system **216** comprises various components configured to move robotic arm **212** along length **259** of uncured composite structure **204** to trim uncured composite structure **204.** Movement system **216** may take the form of rails, wheels, or other suitable movement mechanisms. In some cases, movement system **216** and robotic arm **212** may comprise an autonomous vehicle capable of moving freely about manufacturing environment **200.**

Prior to layup of uncured composite structure **204,** layer of porous material **274** is placed over tool **214.** In other words, layer of porous material **274** is positioned between uncured composite structure **204** and tool **214.** Layer of porous material **274** may take various forms. For example, without limitation, layer of porous material may be a sheet comprise a material selected from at least one of polyethylene, polytetrafluoroethylene (PTFE), or some other suitable type of material. Layer of porous material **274** is porous such that vacuum **276** may be drawn on the materials. The pore size for layer of porous material **274** may vary, depending on the particular implementation.

Layer of porous material **274** is configured to prevent deflection of blade **232** into uncured composite structure **204.** Layer of porous material **274** lifts uncured composite structure **204** off tool **214** in a desired manner. As a result, instead of deflecting toward uncured composite structure **204,** blade **232** remains in a desired position to promote integrity of the cut. Auto stop features in the ultrasonic knife are not triggered because instead of hitting tool **214** and deflecting toward uncured composite structure **204,** blade **232** cuts through layer of porous material **274.** The thickness of layer of porous material **274** is selected to lift uncured composite structure **204** off tool **214** to prevent the stop feature and/or blade deflection. Various thicknesses may be used depending on the length of blade **232** or other parameters **242.**

Vacuum system **218** comprises a number of components configured to draw vacuum **276** on tool **214,** layer of porous material **274,** and uncured composite structure **204.** Vacuum **276** is pulled while blade **232** trims uncured composite structure **204.**

With an illustrative embodiment, composite manufacturing system **202** can work more efficiently and with more versatility to trim uncured composite structure **204** than previously contemplated. As a result, uncured composite structure **204** is formed more quickly and with less rework than with currently used systems.

The illustrative embodiments are designed to create a smooth cut using asymmetric blade **232** and allow for trimming system **210** to cut uncured composite structures in multiple complex geometries. Robotic arm **212** moves trimming system **210** about uncured composite structure **204** such that flipping is not necessary, thus reducing manpower. In addition, the setup of tool **214** and layer of porous material **274** reduces deflection of blade **232.** All parameters of blade **232** of knife **220** may be adjusted in real time, allowing trimming system **210** to perform more complex operations than previously used systems.

With reference next to **Figure 3****,** an illustration of a perspective view of a trimming system is depicted in accordance with an illustrative embodiment. **Figure 3** illustrates an example of physical implementations of components within composite manufacturing system **202** shown in block form in **Figure 2****.** A more-detailed view of section **114** from **Figure 1** is shown.

As depicted, blade **300** of knife **302** is placed near start position **304** for trimming uncured composite structure **102.** Blade **300** moves in the direction of arrow **306** along path **308** to cut uncured composite structure **102** in a desired manner in this illustrative example. In some cases, it may be necessary for blade **300** to travel in the opposite direction. Trimming system **110** and robotic arm **106** are configured to accommodate movement along any axis.

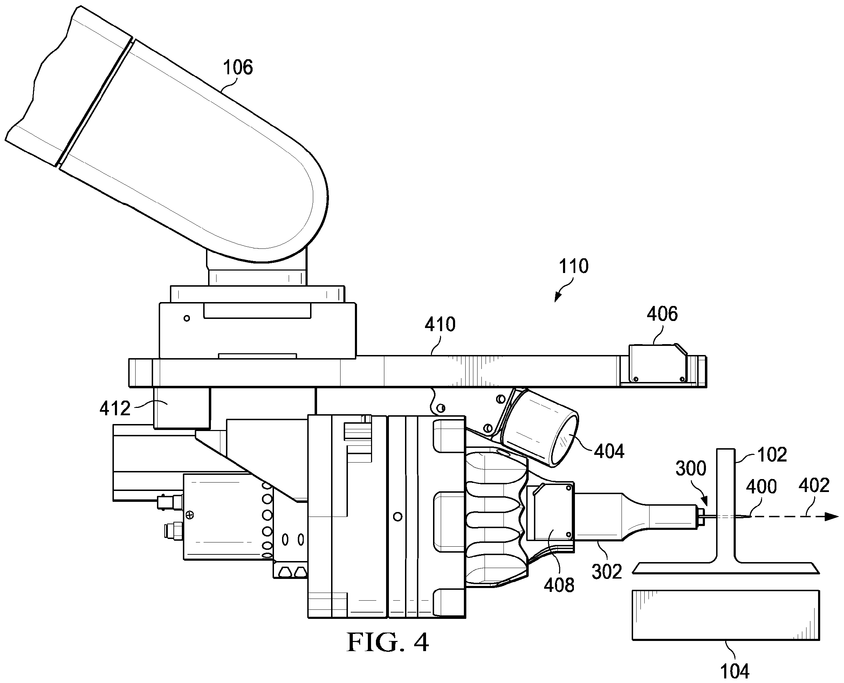

Turning now to **Figure 4****,** an illustration of a side view of a trimming system is depicted in accordance with an illustrative embodiment. **Figure 4** also illustrates an example of physical implementations of components within composite manufacturing system **202** shown in block form in **Figure 2****.** A cross-sectional view of uncured composite structure **102** is shown in this figure.

As illustrated, blade **300** of knife **302** pierced through uncured composite structure **102.** Tip **400** of blade **300** can be seen cutting through uncured composite structure **102.** As trimming system **110** moves, blade **300** may be rotated about center point **402** as desired.

Vision system **404,** laser **406,** and laser **408** are seen in this view. Support structure **410** provides a mounting surface for vision system **404** and laser **406.**

Vision system **404** takes the form of a camera in this illustrative example. Laser **406** is mounted above knife **302** while laser **408** is mounted adjacent to knife **302.** Laser **406** is one of a pair of lasers mounted above knife **302.** In a similar fashion, laser **408** is one of a pair of lasers mounted adjacent to knife **302.** Laser **406** and laser **408** are spot head lasers in this illustrative example.

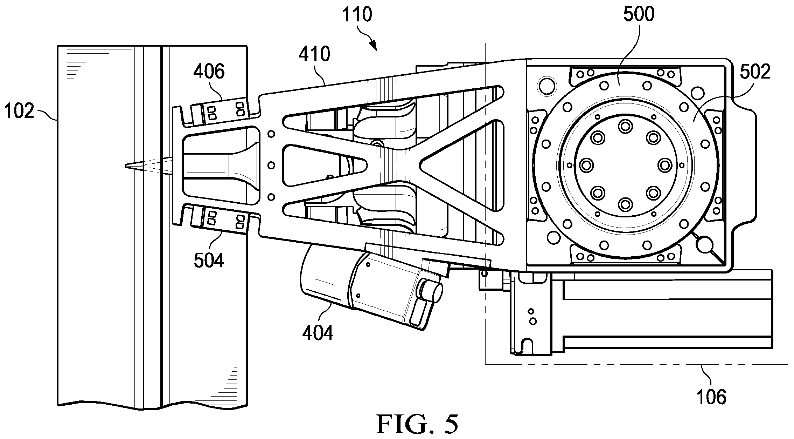

In **Figure 5****,** an illustration of a top view of a trimming system is depicted in accordance with an illustrative embodiment. In this illustrative example, robotic arm **106** is shown in phantom.

As depicted, connector **500** attaches trimming system **110** to robotic arm **106.** Laser **504** is seen in this view. Laser **504** is paired with laser **406** and mounted above knife **302.**

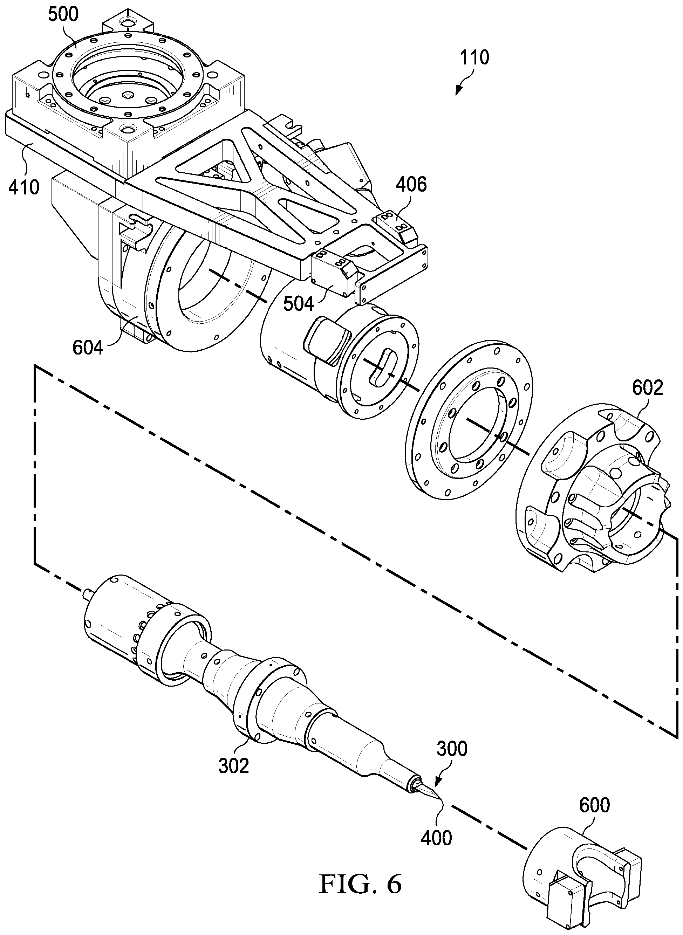

Turning next to Figure 6, an illustration of an exploded view of a trimming system is depicted in accordance with an illustrative embodiment. In this illustrative example, clamp 600 and clamp 602 are shown. Clamp 600 and clamp 602 secure knife 302 to other components in trimming system 110. Rotary stage 604 provides rotation for blade 300 about its center point. Load cell 606 measures the amount of force applied to blade **300** during trimming.

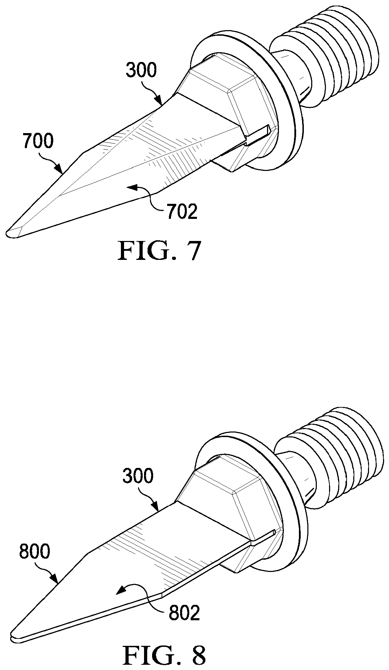

**Figure 7** and **Figure 8** are illustrations of two sides of a knife blade in accordance with the claimed invention. Side **700** of blade **300** is shown in **Figure 7** while side **800** of blade **300** is shown in **Figure 8****.** Blade **300** is an asymmetrical blade. In other words, the shape of side **700** and side **800** are different.

As illustrated, side **700** of blade **300** has double-beveled shape **702.** Side **800** has substantially flat shape **802.** As blade **300** cuts through uncured composite structure **102,** side **800** with substantially flat shape **802** is oriented inward toward the part while side **700** with double-beveled shape **702** is oriented outward toward the material being trimmed from uncured composite structure **102.**

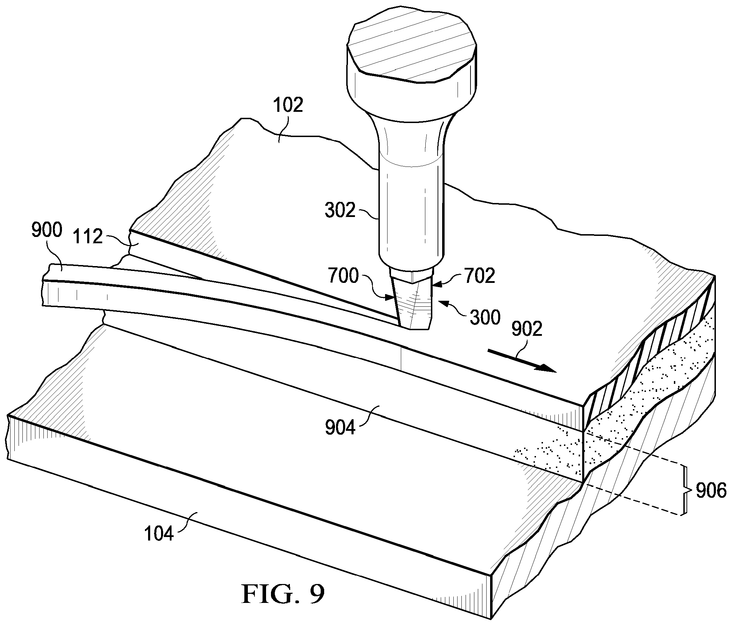

With reference next to **Figure 9****,** an illustration of a perspective view of a cut in an uncured composite structure is depicted in accordance with the claimed invention. **Figure 9** shows asymmetrical blade **300** as it cuts through uncured composite structure **102.**

In this illustrative example, distinct layers of composite material **112** are shown as blade **300** cuts off trimmed material **900.** Blade **300** is moving in the direction of arrow **902** with side **700** facing outward and side **800** facing toward the final part.

As depicted, layer of porous material **904** has been positioned between tool **104** and uncured composite structure **102.** Layer of porous material **904** is an example of a physical implementation for layer of porous material **274** shown in block form in **Figure 2****.** Layer of porous material **904** has thickness **906** enough to substantially prevent blade deflection or emergency stop features of blade **300** and knife **302.**

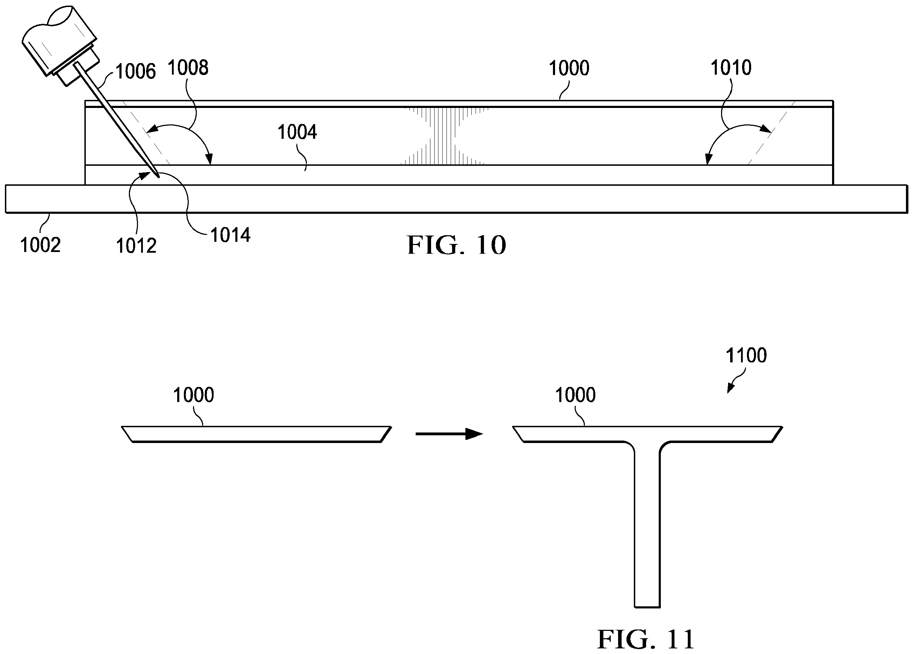

Turning to **Figure 10****,** an illustration of a cross-sectional view of a composite stringer is depicted in accordance with an illustrative embodiment. Composite structure **1000** is shown prior to being trimmed into its final shape.

As illustrated, composite structure **1000** is positioned on tool **1002.** Layer of porous material **1004** is located between composite structure **1000** and tool **1002.** Blade **1006** is used to trim composite structure **1000.** Blade **1006** is an asymmetrical blade with a double-beveled side and a substantially flat side in accordance with the claimed invention. Blade **1006** cuts composite structure **1000** along its length on angle **1008** and angle **1010.**

As seen in this view, portion **1012** of blade **1006,** including tip **1014,** cuts into layer of porous material **1004** as blade **1006** trims composite structure **1000.** Layer of porous material **1004,** therefore, prevents blade **1006** from contacting tool **1002** and deflecting toward composite structure **1000.**

**Figure 11** shows a cross-sectional view of a composite stringer in accordance with an illustrative embodiment. Composite structure **1000** from **Figure 10** is shown post trimming. Composite structure **1000** and other composite parts are used to form composite stringer **1100.** Blade **1006** can trim uncured composite material without the need to reorient the charge, flip the assembly, or move the assembly from its position when laid up and consolidated.

The different components shown in **Figure 1** and **Figures 3****-11** may be combined with components in **Figure** 2, used with components in **Figure 2****,** or a combination of the two. Additionally, some of the components in **Figure 1** and **Figures 3****-11** may be illustrative examples of how components shown in block form in **Figure 2** may be implemented as physical structures.

Other configurations for composite manufacturing system **100** may be implemented other than those shown in **Figures 1** and **Figures 3****-11.** For instance, although only one robotic arm with one trimming system is shown in **Figure 1** and **Figures 3****-11,** two, three, five, or more robotic arms may be used at the same time. In such an illustrative example, the robotic arms may be performing the same processes or different processes at substantially the same time along the length of the composite structure. In other illustrative examples, uncured composite structure **102** may be held in an alternative configuration than shown herein.

Although the illustrative embodiments are shown and described with reference to forming stringers for aircraft applications, the illustrative embodiments can be used with any type of platform to trim composite parts for that platform. Moreover, although the illustrative embodiments are described with reference to a porous material. When a vacuum is not used, the material selected does not need to be porous. In other words, if cutting of the composite material is not completed under vacuum, the material need not be porous to enable an illustrative embodiment.

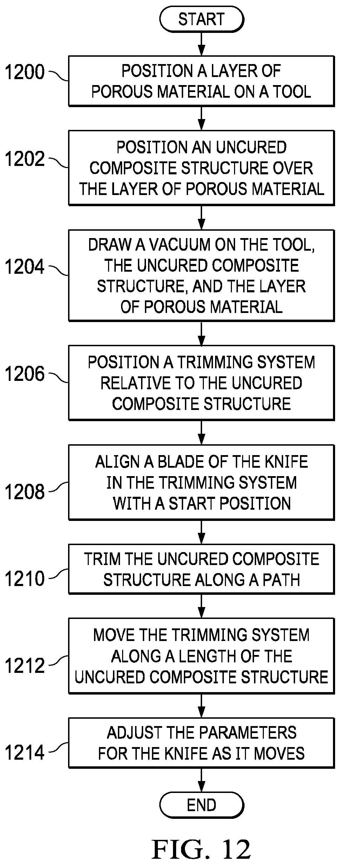

With reference next to **Figure 12****,** an illustration of a flowchart of a process for trimming an uncured composite structure is depicted in accordance with an illustrative embodiment. The method depicted in **Figure 12** may be used with trimming system **210** to trim uncured composite structure **204** in **Figure 2****.**

The process begins by positioning a layer of porous material on a tool (operation **1200**). Next, an uncured composite structure is positioned over the layer of porous material (operation **1202**)**.** A vacuum is drawn on the tool, the uncured composite structure, and the layer of porous material (operation **1204**).

Thereafter, a trimming system is positioned relative to the uncured composite structure (operation **1206**). Next, the process aligns a blade of the knife in the trimming system with a start position (operation **1208**). The process trims the uncured composite structure along a path (operation **1210**). The trimming system is moved along a length of the uncured composite structure (operation **1212**).

The process adjusts the parameters for the knife as it moves (operation **1214**), with the process terminating thereafter. Adjusting the parameters for the knife may include rotating the knife about a center point using a rotation device integrated in the trimming system.

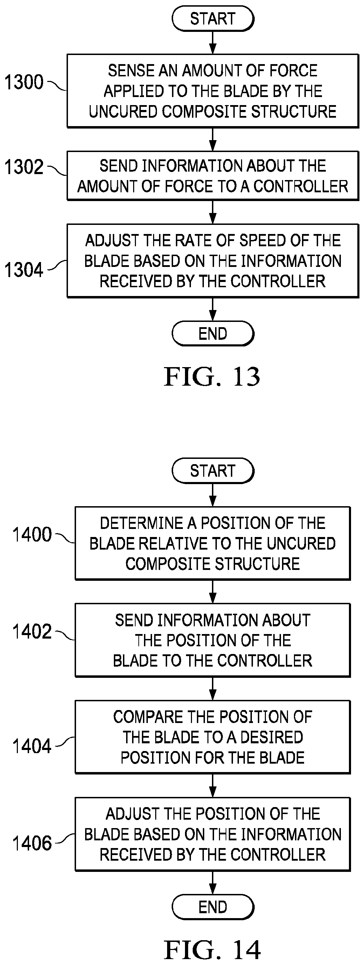

Turning now to **Figure 13****,** an illustration of a flowchart of a process for trimming an uncured composite structure is depicted in accordance with an illustrative embodiment. The method depicted in **Figure 13** may be used during operation **1214** from **Figure 12** to adjust the parameters of the blade of the knife during trimming.

The process begins by sensing an amount of force applied to the blade by the uncured composite structure (operation **1300**). Next, the process sends information about the amount of force to a controller (operation **1302**). The process then adjusts the rate of speed of the blade based on the information received by the controller (operation **1304**), with the process terminating thereafter. At least one of the direction, the angle, and the depth of the blade also may be adjusted based on the information received by the controller.

Turning now to **Figure 14****,** an illustration of a flowchart of a process for trimming an uncured composite structure is depicted in accordance with an illustrative embodiment. The method depicted in **Figure 14** may be used during operation **1214** from **Figure 12** to adjust the parameters of the blade of the knife during trimming. Operations described with reference to **Figure 13** and **Figure 14** may occur substantially concurrently.

The process begins by determining a position of the blade relative to the uncured composite structure (operation 1400). Next, the process sends information about the position of the blade to the controller (operation **1402**). The process then compares the position of the blade to a desired position for the blade (operation **1404**). The process adjusts the position of the blade based on the information received by the controller (operation **1406**), with the process terminating thereafter.

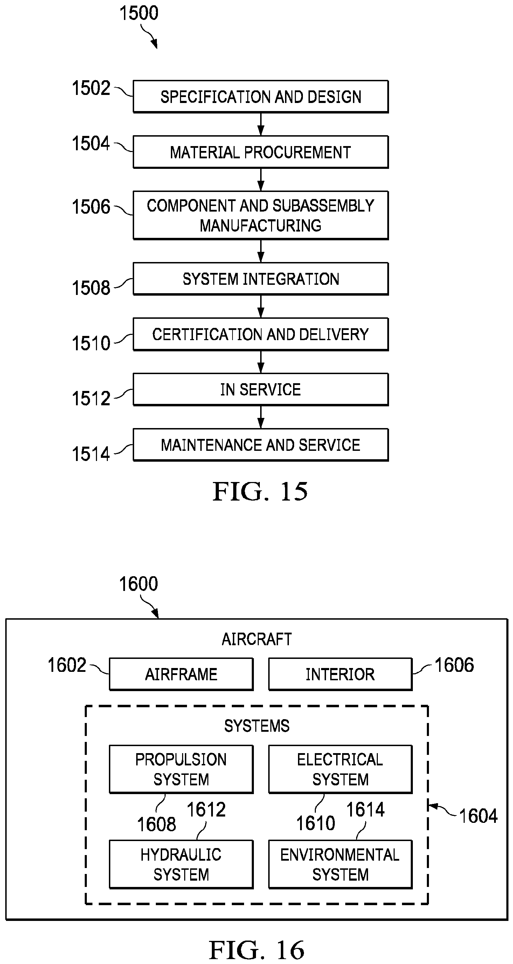

Illustrative embodiments of the disclosure may be described in the context of aircraft manufacturing and service method **1500** as shown in **Figure 15** and aircraft **1600** as shown in **Figure 16****.** Turning first to **Figure 15****,** an illustration of a block diagram of an aircraft manufacturing and service method is depicted in accordance with an illustrative embodiment. During pre-production, aircraft manufacturing and service method **1500** may include specification and design **1502** of aircraft **1600** in **Figure 16** and material procurement **1504.**

During production, component and subassembly manufacturing **1506** and system integration **1508** of aircraft **1600** in **Figure 16** takes place. Thereafter, aircraft **1600** in **Figure 16** may go through certification and delivery **1510** in order to be placed in service **1512.** While in service **1512** by a customer, aircraft **1600** in **Figure 16** is scheduled for routine maintenance and service **1514,** which may include modification, reconfiguration, refurbishment, and other maintenance or service.

Uncured composite structure **204** from **Figure 2** may be made using composite manufacturing system **202** with trimming system **210** during component and subassembly manufacturing **1506.** In addition, trimming system **210** may be used during routine maintenance and service **1514** as part of a modification, reconfiguration, or refurbishment of aircraft **1600** in **Figure 16****.**

Each of the processes of aircraft manufacturing and service method **1500** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers, and an operator may be an airline, a leasing company, a military entity, a service organization, and so on.

With reference now to **Figure 16****,** an illustration of a block diagram of an aircraft is depicted in which a composite structure made using an illustrative embodiment may be implemented. In this example, aircraft **1600** is produced by aircraft manufacturing and service method **1500** in **Figure 15** and may include airframe **1602** with plurality of systems **1604** and interior **1606.** Examples of systems **1604** include one or more of propulsion system **1608,** electrical system **1610,** hydraulic system **1612,** and environmental system **1614.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1500** in **Figure 15****.** In one illustrative example, components or subassemblies produced in component and subassembly manufacturing **1506** in **Figure 15** may be fabricated or manufactured in a manner similar to components or subassemblies produced while aircraft **1600** is in service **1512** in **Figure 15****.** As yet another example, one or more apparatus embodiments, method embodiments, or a combination thereof may be utilized during production stages, such as component and subassembly manufacturing **1506** and system integration **1508** in **Figure 15****.** One or more apparatus embodiments, method embodiments, or a combination thereof may be utilized while aircraft **1600** is in service **1512,** during maintenance and service **1514** in **Figure 15****,** or both. The use of a number of the different illustrative embodiments may substantially expedite the assembly of aircraft **1600,** reduce the cost of aircraft **1600,** or both expedite the assembly of aircraft **1600** and reduce the cost of aircraft **1600.**

With the use of an illustrative embodiment, a composite manufacturing system can work more efficiently with less risk of going offline due to blade deflection, damage, or poorly cut parts. As a result, composite structures are formed more quickly and with less rework than with currently used systems.

The illustrative embodiments also have precision control cutting capabilities. The knife blade can be adjusted in real time in multiple axes. The robotic arm travels the length of the composite structure without having to move the composite structure if so desired. More than one robotic arm can work on the composite structure simultaneously. With the use of an asymmetrical blade and a layer of porous material, consistency in cutting uncured composites can be realized.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added, in addition to the illustrated blocks, in a flowchart or block diagram.

## Claims

1. A composite manufacturing system (100;202) comprising:
a robotic arm (106;212); and
a trimming system (110;210) connected to the robotic arm, the trimming system (110;210) comprising:
a knife (220) having a blade (232), the blade (232) comprising a first side (234) having a double-beveled shape, and a second side (236) opposite the first side having a planar shape, wherein the second side of the blade is configured to trim the uncured composite structure (112;204);
a rotation device (222) configured to rotate the blade (232) of the knife (220) about a center point (260);
a number of lasers (224) configured to determine a position of the blade (232) relative to a desired position for the blade; and
a load cell (226) associated with the knife (220) and configured to sense an amount of force (272) applied to the blade (232) during trimming of an uncured composite structure (112;204).

2. The composite manufacturing system of claim 1 further comprising:
a controller (228) configured to adjust parameters of the blade based on information (270) received from the load cell (226) .

3. The composite manufacturing system of claim 2, wherein the controller (228) is further configured to adjust at least one of a rate of speed, a direction, the position, and a depth of the blade (232) based on information received by the number of lasers (224).

4. The composite manufacturing system of any one of claims 1-3, wherein the number of lasers (224) comprises:
a first pair of lasers (262) associated with the knife and positioned in a first location (266) relative to the blade of the knife; and
a second pair of lasers (264) associated with the knife and positioned in a second location (268) relative to the blade of the knife.

5. The composite manufacturing system of any one of claims 1-4, wherein the trimming system (210) comprises:
a vision system (230) configured to provide visual information as the blade (232) cuts through the uncured composite structure (112;204).

6. The composite manufacturing system of any one of claims 1-5, wherein the composite manufacturing system (100;202) further comprises:
a layer of porous material (274) positioned between the uncured composite structure (112;204) and a tool (214).

7. The composite manufacturing system of claim 6 further comprising:
a vacuum system (218) configured to draw a vacuum on the tool, the layer of porous material (274), and the uncured composite structure (112;204) while the blade (232) trims the uncured composite structure (112;204).

8. The composite manufacturing system of any one of claims 1-7 further comprising:
a movement system (216) associated with the robotic arm (212) and configured to move the trimming system (210) along a length (259) of the uncured composite structure (112;204) to trim the uncured composite structure (112;204).

9. A method for trimming an uncured composite structure (112;204), the method comprising:
positioning a trimming system (210) relative to the uncured composite structure (112;204), wherein the trimming system is removably connected to a robotic arm (212);
aligning a blade (232) of a knife (220) in the trimming system (210) with a start position (258), wherein the blade (232) comprises a first side (234) having a double-beveled shape, and a second side (236) opposite the first side having a planar shape;
trimming the uncured composite structure (112;204) along a path (256) using the second side (236) of the blade (232); and
adjusting parameters for the knife (220) during trimming
wherein a rotation device (222) is configured to rotate the blade (232) of the knife (220) about a center point (260) ;
wherein a number of lasers (224) are configured to determine a position of the blade (232) relative to a desired position for the blade; and
wherein a load cell (226) is associated with the knife (220) and is configured to sense an amount of force (272) applied to the blade (232) during trimming of the uncured composite structure (112;204).

10. The method of claim 9, wherein adjusting the parameters of the knife (220) comprises:
sensing an amount of force (272) applied to the blade by the uncured composite structure (112;204);
sending information about the amount of force (272) to a controller (228); and
adjusting a rate of speed (248) of the blade (232) based on the information received by the controller (228).

11. The method of claim 10, further comprising:
adjusting at least one of a direction, an angle, and a depth of the blade based on the information received by the controller (228).

12. The method of claim 11, wherein adjusting the angle of the blade (232) comprises:
rotating the knife (220) about a center point (260) using the rotation device (222).

13. The method of any one of claims 9-12 further comprising:
determining a position of the blade (232) relative to the uncured composite structure (112;204);
sending information about the position of the blade (232) to a controller (228); and
adjusting the position of the blade (232) based on information received by the controller (228).

14. The method of any one of claims 9-13 further comprising:
moving the trimming system (210) along a length (259) of the uncured composite structure (112;204) to trim the uncured composite structure (112;204).

15. The method of any one of claims 9-14, further comprising;
positioning a layer of porous material (274) between the uncured composite structure (112;204) and a tool (214);
drawing a vacuum on the tool (214), the uncured composite structure (112;204), and the layer of porous material (274); and
trimming the uncured composite structure (112;204) using the second side (236) of the blade (232) having the planar shape.

## Patentansprüche

1. System (100; 202) zur Herstellung von Kompositen, aufweisend:
einen Roboterarm (106; 212); und
ein Trimmsystem (110; 210), das mit dem Roboterarm verbunden ist, wobei das Trimmsystem (110; 210) folgendes aufweist:
ein Messer (220) mit einer Klinge (232), wobei die Klinge (232) eine erste Seite (234) mit einer doppelt abgeschrägten Form und eine der ersten Seite gegenüberliegende zweite Seite (236) mit einer ebenen Form aufweist, wobei die zweite Seite der Klinge dazu ausgebildet ist, die nicht ausgehärtete Komposit-Struktur (112; 204) zu trimmen;
eine Rotationsvorrichtung (222), die dazu ausgebildet ist, um die Klinge (232) des Messers (220) um einen Mittelpunkt (260) zu drehen;
eine Anzahl von Lasern (224), die dazu ausgebildet sind, um eine Position der Klinge (232) relativ zu einer gewünschten Position für die Klinge zu bestimmen; und
einen Kraftaufnehmer (226), der dem Messer (220) zugeordnet und dazu ausgebildet ist, dass er einen auf die Klinge (232) während des Trimmens einer nicht ausgehärteten Komposit-Struktur (112; 204) aufgebrachten Kraftbetrag (272) erfasst.

2. System zur Herstellung von Kompositen nach Anspruch 1, das ferner aufweist:
eine Steuerung (228), die dazu ausgebildet ist, dass sie Parameter der Klinge basierend auf von dem Kraftaufnehmer (226) empfangener Information (270) einstellt.

3. System zur Herstellung von Kompositen nach Anspruch 2, wobei die Steuerung (228) dazu ausgebildet ist, dass sie basierend auf Information, die von der Anzahl von Lasern (224) empfangen wird, zumindest eine Geschwindigkeitsrate, eine Richtung, die Position und eine Tiefe der Klinge (232) einstellt.

4. System zur Herstellung von Kompositen nach einem beliebigen der Ansprüche 1-3, wobei die Anzahl von Lasern (224) aufweist:
ein erstes Paar von Lasern (262), die dem Messer zugeordnet sind und an einer ersten Stelle (266) relativ zu der Klinge des Messers angeordnet sind; und
ein zweites Paar von Lasern (264), die dem Messer zugeordnet sind und an einer zweiten Stelle (268) relativ zu der Klinge des Messers angeordnet sind.

5. System zur Herstellung von Kompositen nach einem beliebigen der Ansprüche 1-4, wobei das Trimmsystem (210) aufweist:
ein Bildverarbeitungssystem (230), dazu ausgebildet, um visuelle Information bereitzustellen, wenn die Klinge (232) durch die nicht ausgehärtete Komposit-Struktur (112; 204) schneidet.

6. System zur Herstellung von Kompositen nach einem beliebigen der Ansprüche 1-5, wobei das System (100; 202) zur Herstellung von Kompositen ferner aufweist:
eine Schicht aus porösem Material (274), die zwischen der nicht ausgehärteten Komposit-Struktur (112; 204) und einem Werkzeug (214) angeordnet ist.

7. System zur Herstellung von Kompositen nach Anspruch 6, ferner aufweisend:
ein Vakuumsystem (218), das dazu ausgebildet ist, um ein Vakuum an das Werkzeug, die Schicht aus porösem Material (274) und die nicht ausgehärtete Komposit-Struktur (112; 204) anzulegen, während die Klinge (232) die nicht ausgehärtete Komposit-Struktur (112; 204) trimmt.

8. System zur Herstellung von Kompositen nach einem beliebigen der Ansprüche 1-7, ferner aufweisend:
ein Bewegungssystem (216), das dem Roboterarm (212) zugeordnet und derart ausgebildet ist, dass es das Trimmsystem (210) entlang einer Länge (259) der nicht ausgehärteten Komposit-Struktur (112; 204) bewegt, um die nicht ausgehärtete Komposit-Struktur (112; 204) zu trimmen.

9. Verfahren zum Trimmen einer nicht ausgehärteten Komposit-Struktur (112; 204), wobei das Verfahren Folgendes aufweist:
Positionieren eines Trimmsystems (210) relativ zu der nicht ausgehärteten Komposit-Struktur (112; 204), wobei das Trimmsystem lösbar mit einem Roboterarm (212) verbunden ist;
Ausrichten einer Klinge (232) eines Messers (220) in dem Trimmsystem (210) auf eine Startposition (258), wobei die Klinge (232) eine erste Seite (234) mit einer doppelt abgeschrägten Form und eine der ersten Seite gegenüberliegende zweite Seite (236) mit einer ebenen Form aufweist;
Trimmen der nicht ausgehärteten Komposit-Struktur (112; 204) entlang eines Pfades (256) unter Verwendung der zweiten Seite (236) der Klinge (232); und
Einstellen von Parametern für das Messer (220) während des Trimmens,
wobei eine Rotationsvorrichtung (222) ausgebildet ist, um die Klinge (232) des Messers (220) um einen Mittelpunkt (260) zu drehen;
wobei eine Anzahl von Lasern (224) ausgebildet ist, um eine Position der Klinge (232) relativ zu einer gewünschten Position für die Klinge zu bestimmen; und
wobei dem Messer (220) ein Kraftaufnehmer (226) zugeordnet ist, der ausgebildet ist, um einen auf die Klinge (232) während des Trimmens der nicht ausgehärteten Komposit-Struktur (112; 204) ausgeübten Kraftbetrag (272) zu erfassen.

10. Verfahren nach Anspruch 9, wobei das Einstellen der Parameter des Messers (220) aufweist:
Erfassen eines Kraftbetrags (272), der von der nicht ausgehärteten Komposit-Struktur (112; 204) auf die Klinge ausgeübt wird;
Senden von Information über den Kraftbetrag (272) an eine Steuerung (228); und
Einstellen einer Geschwindigkeitsrate (248) der Klinge (232) basierend auf der von der Steuerung (228) empfangenen Information.

11. Verfahren nach Anspruch 10, ferner aufweisend:
Einstellen zumindest einer Richtung, eines Winkels oder einer Tiefe der Klinge basierend auf der Information, die von der Steuerung (228) empfangen wird.

12. Verfahren nach Anspruch 11, wobei das Einstellen des Winkels der Klinge (232) aufweist:
Drehen des Messers (220) um einen Mittelpunkt (260) unter Verwendung der Rotationsvorrichtung (222).

13. Verfahren nach einem beliebigen der Ansprüche 9-12, ferner aufweisend:
Bestimmen einer Position der Klinge (232) relativ zu der nicht ausgehärteten Komposit-Struktur (112; 204);
Senden von Information über die Position der Klinge (232) an eine Steuerung (228); und
Einstellen der Position der Klinge (232) basierend auf der von der Steuerung (228) empfangenen Information.

14. Verfahren nach einem beliebigen der Ansprüche 9-13, ferner aufweisend:
Bewegen des Trimmsystems (210) entlang einer Länge (259) der nicht ausgehärteten Komposit-Struktur (112; 204), um die nicht ausgehärtete Komposit-Struktur (112; 204) zu trimmen.

15. Verfahren nach einem beliebigen der Ansprüche 9-14, ferner aufweisend;
Positionieren einer Schicht aus porösem Material (274) zwischen der nicht ausgehärteten Komposit-Struktur (112; 204) und einem Werkzeug (214);
Anlegen eines Vakuums an das Werkzeug (214), die nicht ausgehärtete Komposit-Struktur (112; 204) und die Schicht aus porösem Material (274); und
Trimmen der nicht ausgehärteten Komposit-Struktur (112; 204) unter Verwendung der zweiten Seite (236) der Klinge (232), die die ebene Form aufweist.

## Revendications

1. Système de fabrication de structures composites (100 ; 202) comprenant :
un bras robotique (106 ; 212) ; et
un système de découpage (110 ; 210) raccordé au bras robotique, le système de découpage (110 ; 210) comprenant :
un couteau (220) comportant une lame (232), la lame (232) comprenant un premier côté (234) présentant une forme à double biseau, et un second côté (236) à l'opposé du premier côté présentant une forme plane, le second côté de la lame étant conçu pour découper la structure composite non durcie (112 ; 204) ;
un dispositif de rotation (222) conçu pour imprimer une rotation à la lame (232) du couteau (220) autour d'un point central (260) ;
un certain nombre de lasers (224) conçus pour déterminer une position de la lame (232) relativement à une position souhaitée pour la lame ; et
une cellule de charge (226) associée au couteau (220) et conçue pour détecter une quantité de force (272) appliquée à la lame (232) lors du découpage d'une structure composite non durcie (112 ; 204).

2. Système de fabrication de structures composites selon la revendication 1, comprenant, en outre :
un dispositif de commande (228) conçu pour ajuster des paramètres de la lame en fonction d'informations (270) reçues de la cellule de charge (226).

3. Système de fabrication de structures composites selon la revendication 2, dans lequel le dispositif de commande (228) est conçu, en outre, pour ajuster au moins un paramètre parmi une vitesse, une direction, la position et une profondeur de la lame (232) en fonction d'informations reçues par les lasers (224).

4. Système de fabrication de structures composites selon l'une quelconque des revendications 1 à 3, dans lequel les lasers (224) comprennent :
une première paire de lasers (262) associée au couteau et placée à un premier endroit (266) relativement à la lame du couteau ; et
une seconde paire de lasers (264) associée au couteau et placée à un second endroit (268) relativement à la lame du couteau.

5. Système de fabrication de structures composites selon l'une quelconque des revendications 1 à 4, dans lequel le système de découpage (210) comprend :
un système de vision (230) conçu pour fournir des informations visuelles tandis que la lame (232) découpe la structure composite non durcie (112 ; 204).

6. Système de fabrication de structures composites selon l'une quelconque des revendications 1 à 5, le système de fabrication de structures composites (100 ; 202) comprenant, en outre :
une couche de matériau poreux (274) placée entre la structure composite non durcie (112 ; 204) et un outil (214).

7. Système de fabrication de structures composites selon la revendication 6, comprenant, en outre :
un système à vide (218) conçu pour créer un vide au niveau de l'outil, la couche de matériau poreux (274) et la structure composite non durcie (112 ; 204) tandis que la lame (232) découpe la structure composite non durcie (112 ; 204).

8. Système de fabrication de structures composites selon l'une quelconque des revendications 1 à 7, comprenant, en outre :
un système de déplacement (216) associé au bras robotique (212) et conçu pour déplacer le système de découpage (210) le long d'une longueur (259) de la structure composite non durcie (112 ; 204) pour découper la structure composite non durcie (112 ; 204).

9. Procédé de découpage d'une structure composite non durcie (112 ; 204), le procédé comprenant :
positionner un système de découpage (210) relativement à la structure composite non durcie (112 ; 204), le système de découpage étant raccordé de manière amovible à un bras robotique (212) ;
aligner une lame (232) d'un couteau (220) dans le système de découpage (210) avec une position initiale (258), la lame (232) comprenant un premier côté (234) présentant une forme à double biseau, et un second côté (236) à l'opposé du premier côté présentant une forme plane ;
découper la structure composite non durcie (112 ; 204) le long d'un chemin (256) au moyen du second côté (236) de la lame (232) ; et
ajuster des paramètres pour le couteau (220) pendant le découpage
un dispositif de rotation (222) étant conçu pour imprimer une rotation à la lame (232) du couteau (220) autour d'un point central (260) ;
un certain nombre de lasers (224) étant conçus pour déterminer une position de la lame (232) relativement à une position souhaitée pour la lame ; et
une cellule de charge (226) étant associée au couteau (220) et étant conçue pour détecter une quantité de force (272) appliquée à la lame (232) lors du découpage de la structure composite non durcie (112 ; 204).

10. Procédé selon la revendication 9, dans lequel l'ajustement des paramètres du couteau (220) comprend :
détecter une quantité de force (272) appliquée à la lame par la structure composite non durcie (112 ; 204) ;
envoyer des informations concernant la quantité de force (272) à un dispositif de commande (228) ; et
ajuster une vitesse (248) de la lame (232) en fonction des informations reçues par le dispositif de commande (228).

11. Procédé selon la revendication 10, comprenant, en outre, :
ajuster au moins un paramètre parmi une direction, un angle et une profondeur de la lame en fonction des informations reçues par le dispositif de commande (228).

12. Procédé selon la revendication 11, dans lequel l'ajustement de l'angle de la lame (232) comprend :
imprimer une rotation au couteau (220) autour d'un point central (260) au moyen du dispositif de rotation (222).

13. Procédé selon l'une quelconque des revendications 9 à 12, comprenant, en outre :
déterminer une position de la lame (232) relativement à la structure composite non durcie (112 ; 204) ;
envoyer des informations concernant la position de la lame (232) à un dispositif de commande (228) ; et
ajuster la position de la lame (232) en fonction d'informations reçues par le dispositif de commande (228).

14. Procédé selon l'une quelconque des revendications 9 à 13, comprenant, en outre :
déplacer le système de découpage (210) le long d'une longueur (259) de la structure composite non durcie (112 ; 204) pour découper la structure composite non durcie (112 ; 204).

15. Procédé selon l'une quelconque des revendications 9 à 14, comprenant, en outre :
placer une couche de matériau poreux (274) entre la structure composite non durcie (112 ; 204) et un outil (214) ;
créer un vide au niveau de l'outil (214), la structure composite non durcie (112 ; 204) et la couche de matériau poreux (274) ; et
découper la structure composite non durcie (112 ; 204) au moyen du second côté (236) de la lame (232) présentant la forme plane.
